# EUROPÄISCHE PATENTSCHRIFT

(11) **EP 1 069 718 B1**
(45) Veröffentlichungstag und Bekanntmachung des Hinweises auf die Patenterteilung: **12.11.2003**
(21) Anmeldenummer: 00440200.4
(22) Anmeldetag: 30.06.2000
(51) Int. Cl.: H04J 3/16

(54) **Umwandlung von nahtloser Verkettung zu virtueller Verkettung in einem synchronen digitalen Nachrichtenübertragungsnetz**
Conversion of seamless concatenation into virtual concatenation in a synchronous digital data transmission network
Conversion de concaténation sans discontinuité en concaténation virtuelle dans un réseau de transmission de données numérique synchrone

(30) Priorität: 14.07.1999 DE 19932739
(43) Veröffentlichungstag der Anmeldung: 17.01.2001
(73) Patentinhaber: ALCATEL, 75008 Paris (FR)
(72) Erfinder: Heuer, Volkmar, 71254 Ditzingen (DE)
(74) Vertreter: Urlichs, Stefan, Dipl.-Phys.

(56) Entgegenhaltungen:
- EP-A- 0 901 306
- WO-A-97/33398

## Beschreibung

Die Erfindung betrifft ein Verfahren zum Übertragen von Nutzdaten über ein synchrones digitales Nachrichtenübertragungsnetz nach dem Oberbegriff des Anspruchs 1 sowie einen Multiplexer für ein synchrones digitales Nachrichtenübertragungsnetz nach dem Oberbegriff des Anspruchs 5 und ein Peripheriegerät nach dem Oberbegriff des Anspruchs 6.

In einem synchronen digitalen Nachrichtenübertragungsnetz wie beispielsweise in SDH- oder SONET-Systemen werden zu übertragende Nachrichten als Nutzlast von Multiplexeinheiten übertragen. In SDH-Systemen werden solche Multiplexeinheiten als virtuelle Container bezeichnet, bei SONET als *Virtual Tributaries*. Die Multiplexeinheiten werden in synchronen Transportmodulen STM-N (N=1, 4, 16, 64) übertragen, in denen sie frei positioniert sein können. Bei SDH ist die größte Multiplexeinheit der virtuelle Container VC-4 mit einer Nutzlast-Kapazität von 149,760 Mbit. Zusammen mit einem Zeiger im Kopfbereich des Transportmoduls STM-1, der auf den Beginn des Containers zeigt, wird der VC-4 als AU-4 (*Administrative Unit*) bezeichnet. Bei SONET ist die größte Multiplexeinheit ein VT-3 mit einer Kapazität von 48,384 Mbit, der zusammen mit einem entsprechenden Zeiger als AU-3 bezeichnet wird. Sollen Nutzlastsignale, deren Bitrate größer als die Nutzlast der größten Multiplexeinheit ist, übertragen werden, so wird eine Verkettung mehrerer Multiplexeinheiten gebildet.

In ITU-T G.707 Kapitel 8.1.7 werden zwei Formen der Verkettung beschrieben, die alternativ verwendet werden können. Dies ist zum einem die nahtlose Verkettung, die im Englischen als "concatenation of contiguous AU-4s" oder als "contiguous concatenation" bezeichnet wird (Kapitel 8.1.7.1), und zum anderen die virtuelle Verkettung ("virtual concatenation", Kapitel 8.1.7.2). Bei der nahtlosen Verkettung werden aufeinanderfolgende Multiplexeinheiten verkettet, die gemeinsam in einem größeren Transportmodul transportiert werden, z.B. vier AU-4 in einem STM-4, sechzehn AU-4 in einem STM-16, drei AU-3 in einem STM-1 oder zwölf AU-3 in einem STM-4. Beim Zugriff auf die verketteten Multiplexeinheiten wird dabei stets nur der Zeiger auf die erste Multiplexeinheit der Verkettung ausgewertet und dieser Zeigerwert ebenfalls für alle in der Verkettung folgenden Multiplexeinheiten verwendet. Bei virtueller Verkettung werden die einzelnen Multiplexeinheiten unabhängig von einander transportiert und erst an der Datensenke, d.h. im Zielnetzelement, wieder zusammengeführt. Dabei können die einzelnen Multiplexeinheiten sogar über verschiedene Pfade übertragen werden und an der Datensenke Laufzeitunterschiede aufweisen, die dann durch Zwischenspeicherung auszugleichen sind. Üblicherweise werden nur gleichartige Multiplexeinheiten, d.h. Multiplexeinheiten gleicher Größe verkettet.

Während bei Peripheriegeräten, z.B. bei IP-Routern, die ein synchrones digitales Nachrichtenübertragungsnetz als Backbone-Netz nutzen, die nahtlose Verkettung bevorzugt wird, da sie einfacher zu handhaben ist, ist aus Netzsicht die virtuelle Verknüpfung wegen der größeren Flexibilität bevorzugt. Die Umwandlung von nahtloser Verkettung in virtuelle Verkettung ist an sich bekannt. Dabei werden die einzelnen Multiplexeinheiten mit einem jeweils eigenen Zeiger versehen. Eine Kennzeichnung im Kopfbereich (Overhead) der Multiplexeinheiten verweist auf die Verkettung. Für die Kennzeichnung werden derzeit die Bits 1 und 2 des H4-Bytes verwendet, die Verwendung anderer Overhead-Bytes sind jedoch ebenfalls denkbar. Die virtuell verketteten Multiplexeinheiten können anschließend in separaten Transportmodulen transportiert werden.

Aus der WO 97/33398 ist ein SDH-Multiplexer, der zum Zwecke des Transports eines ATM-Datenstroms (Asynchronous Transfer Mode) eine Umwandlung von nahtloser Verkettung in virtuelle Verkettung ausführt und den in der nahtlosen Verkettung enthaltenen ATM-Datenstrom durch inverses Multiplexen in eine Anzahl langsamerer paralleler Datenströme aufteilt, die dann als jeweilige Nutzlast in den einzelnen virtuell verketteten Multiplexeinheiten transportiert werden.

Wie bereits erwähnt, verwenden Peripheriegeräte wie z.B. IP-Router bevorzugt die nahtlose Verkettung. So wird in einem Artikel über den 12008 Gigabit Switch Router der Fa. Cisco, abrufbar aus dem Internet unter der URL "http://www.cisco.com/univercd/cc/td/doc/product/core/cis12008/mfricg/productl .htm", beschrieben, daß das Gerät wahlweise mit einer OC-3c/STM-1c Schnittstelle oder mit einer OC-12c/STM-4c Schnittstelle ausgerüstet werden kann. Beide Schnittstellentypen verwenden nahtlose Verkettung von Multiplexeinheiten. Da die Anzahl der nahtlos verketteten Multiplexeinheiten von dem Schnittstellentyp des Routers abhängt, wird unabhängig von der tatsächlich für IP Nutzlast genutzten Bandbreite stets die gleiche Anzahl von Multiplexeinheiten übertragen.

Aufgabe der Erfindung ist es, ein Verfahren zur Übertragung von Nutzdaten über ein synchrones digitales Nachrichtenübertragungsnetz anzugeben, bei dem die Anzahl der verketteten Multiplexeinheiten an die tatsächlich benötigte Bandbreite angepaßt werden kann. Eine weitere Aufgabe der Erfindung besteht darin, einen Multiplexer für ein synchrones digitales Nachrichtenübertragungsnetz und ein Peripheriegerät anzugeben, die geeignet sind, das erfindungsgemäße Verfahren durchzuführen.

Die Aufgabe wird hinsichtlich des Verfahrens gelöst durch die Merkmale des Anspruchs 1, hinsichtlich des Multiplexers durch die Merkmale des Anspruchs 5 und hinsichtlich des Peripheriegerätes durch die Merkmale des Anspruchs 6. Vorteilhafte Ausgestaltungen sind den abhängigen Ansprüchen zu entnehmen.

Im folgenden wird die Erfindung anhand der Figuren 1 bis 5 in einem Ausführungsbeispiel näher erläutert. Es zeigen:
- Figuren 1 bis 3:: Einen IP-Router, der an ein synchrones digitales Nachrichtenübertragungsnetz angeschlossen ist und ein synchrones Nachrichtensignal mit nahtlos verketteten Multiplexeinheiten erzeugt, wobei die nahtlose Verkettung in einem Multiplexer des Nachrichtenübertragungsnetzes in virtuelle Verkettung umgewandelt wird,
- Figur 4:: ein Blockdiagramm von einem IP-Router als Peripheriegerät für ein synchrones Nachrichtenübertragungsnetz und
- Figur 5:: ein Blockdiagramm von einem Multiplexer des Nachrichtenübertragungsnetzes, der die Umwandlung durchführt.

Ein Grundgedanke der Erfindung liegt darin, im Peripheriegerät eine nahtlose Verkettung von Multiplexeinheiten zu erzeugen, jedoch nur einen Teil der verketteten Multiplexeinheiten für Nutzlast zu verwenden und den übrigen Teil frei zu lassen oder mit einem Füllmuster aufzufüllen. Ein weiterer Grundgedanke der Erfindung besteht darin, daß der Multiplexer am Übergang zu einem synchronen digitalen Nachrichtenübertragungsnetzes eine Umwandlung der nahtlosen Verkettung in eine virtuelle Verkettung durchführt und bei der Umwandlung solche Multiplexeinheiten wegläßt, die nicht mit Nutzlast gefüllt sind. Somit wird eine Anpassung der Anzahl von verketteten Multiplexeinheiten an die tatsächlich benötigte Bandbreite bei der Umwandlung von nahtloser Verkettung in virtuelle Verkettung durchgeführt.

Bei der Erläuterung des erfindungsgemäßen Übertragungsverfahrens wird der Übersichtlichkeit halber im folgenden nur eine Übertragungsrichtung betrachtet. Gleichwohl kann die Übertragung auch bidirektional erfolgen.

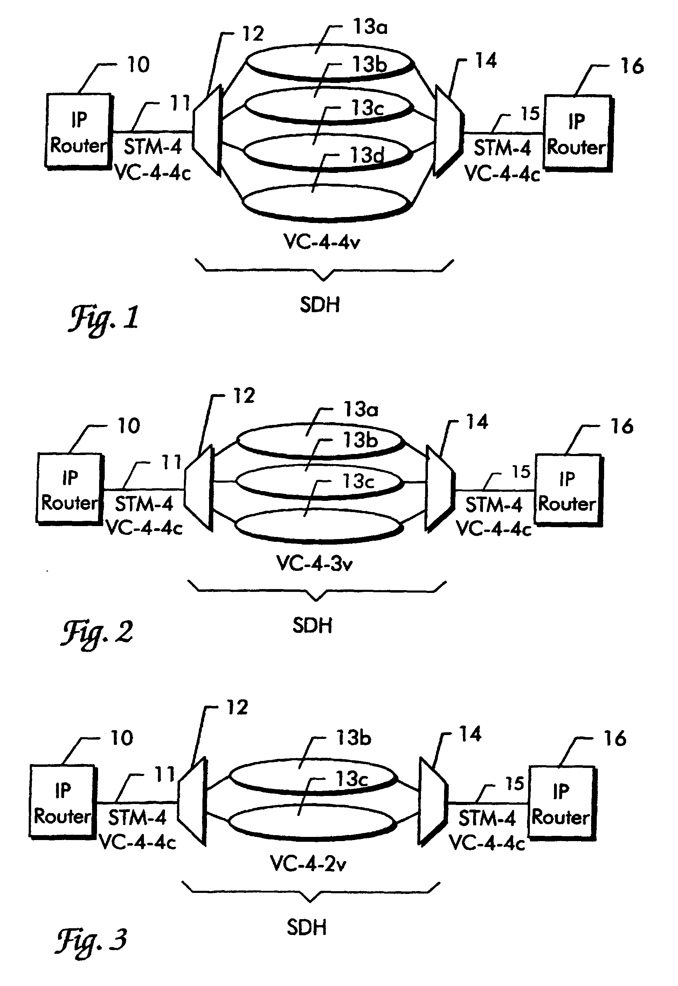

In Figur 1 ist dorgestellt, wie von einem ersten Peripheriegerät 10 eine Nutzlast über ein synchrones digitales Nachrichtenübertragungsnetz SDH zu einem zweiten Peripheriegerät 16 übertragen wird. Die Peripheriegeräte sind IP-Router und die Nutzlast besteht aus Datenpaketen, die nach dem Internet-Protokoll strukturiert sind. In dem ersten IP-Router 10 wird ein synchrones Nachrichtensignal 11 erzeugt. Es handelt sich dabei um ein rahmenstrukturiertes Multiplexsignal vom Typ STM-4. Der STM-4-Rahmen besteht aus vier byteweise verschachtelten Transportmodulen vom Typ STM-1. Jeder der vier STM-1-Rahmen enthält jeweils eine Multiplexeinheit VC-4. Die vier Multiplexeinheiten VC-4 sind nahtlos verkettet. Dadurch ergibt sich eine maximale Nutzlast von 4 x 149 Mbit = 596 Mbit, die von dem IP-Router mit den zu übertragenden IP-Paketen gefüllt wird. Um die IP-Pakete in die Multiplexeinheiten zu verpacken kann z.B. das PPP-Protokoll verwendet werden, das von IETF (Internet Engineering Task Force) festgelegt wurde. Die beschriebene Art der Verkettung wird als VC-4-4c bezeichnet. Die IP-Router 10, 16 sind Teil eines Datennetzwerkes und nutzen das synchrone digitale Nachrichtenübertragungsnetz SDH als Backbone-Netz.

Von dem ersten IP-Router 10 gelangt das synchrone Nachrichtensignal 11 zu einem Multiplexer 12 des synchronen digitalen Nachrichtennetzes SDH. Dieser stellt den Übergang vom synchronen Nachrichtennetz SDH zum Datennetz dar. In dem Multiplexer 12 wird die nahtlose Verkettung der vier Multiplexeinheiten VC-4 in eine virtuelle Verkettung umgewandelt. Dazu wird wie eingangs erwähnt jeder der vier Multiplexeinheiten mit einem eigenen Zeiger versehen und es wird eine Kennzeichnung im Kopfbereich (Overhead) der Multiplexeinheiten eingefügt, die auf die Verkettung hinweist. Die vier virtuell verketteten Multiplexeinheiten VC-4 können nun unabhängig von einander in separaten kleineren oder gemeinsamen größeren Transportmodulen durch das Nachrichtennetz SDH übertragen werden. Im Ausführungsbeispiel ist angedeutet, daß jede der vier virtuell verketteten Multiplexeinheiten über einen eigenen Pfad 13a-d übertragen wird. Die virtuelle Verkettung wird als VC-4-4v bezeichnet.

Die virtuell verketteten Multiplexeinheiten werden nun durch das Nachrichtenübertragungsnetz SDH zur Datensenke, einem zweiten Multiplexer 14 übertragen. Dieser wandelt die virtuelle Verkettung wieder in eine nahtlose Verkettung um und überträgt die vier nahtlos verketteten Multiplexeinheiten in einem zu STM-4-Rahmen strukturierten Nachrichtensignal 15 zu dem zweiten IP-Router 16.

Bei den Multiplexern kann es sich um sogenannte Add/Drop-Multiplexer oder um Terminalmultiplexer handeln, die einzelne oder auch alle Pfade terminieren, die in den empfangenen rahmenstrukturierten Multiplexsignalen enthalten sind.

Zu Zeiten hoher Auslastung des Datennetzes sind alle Multiplexeinheiten voll mit IP-Paketen bepackt und die beschriebene Datenübertragung über das als Backbone-Netz fungierende synchrone digitale Nachrichtenübertragungsnetz ist schnell und effizient. Bei der Paketdatenübertragung treten jedoch auch längere Zeitabschnitte auf, in denen nicht ausreichend zu übertragende IP-Pakete anfallen, um alle vier Multiplexeinheiten voll zu bepacken. Erfindungsgemäß werden in dem IP-Router 10 dann nur ein Teil der Multiplexeinheiten für den Transport von Datenpaketen verwendet und die übrigen Multiplexeinheiten bleiben leer oder werden mit einem Füllmuster gefüllt.

Diese Situation ist in Figur 2 dargestellt. Der IP-Router 10 bepackt nur drei der vier verketteten Multiplexeinheiten VC-4-4c. Die vierte Multiplexeinheit bleibt leer. Das Nachrichtensignal 11, das der IP-Router 10 an den Multiplexer 12 sendet, weist jedoch nach wie vor dieselbe Struktur auf, nämlich einen STM-4-Rahmen mit vier nahtlos verketteten Multiplexeinheiten VC-4-4c. In dem Multiplexer 12 wird die nahtlose Verkettung in die virtuelle Verkettung umgewandelt. Dabei wird die vierte, mit Datenpoketen nicht bepackte Multiplexeinheit weggelassen. Es entsteht also eine virtuelle Verkettung aus drei Multiplexeinheiten VC-4-3v, die über die Pfade 13a-c zu dem zweiten Multiplexer 14 übertragen wird. Dort wird die virtuelle Verkettung wieder zu einer nahtlosen Verkettung umgewandelt und mit einer leeren Multiplexeinheit ergänzt zu VC-4-4c an den zweiten IP-Router 16 übertragen.

Da der STM-4-Rahmen aus vier byteweise verschachtelten STM-1-Rahmen besteht, ist es äußerst einfach für den IP-Router, eine Multiplexeinheit frei zu lassen: Er fügt einfach nach drei Bytes jeweils ein Füllbyte (z.B. hex00) ein. Der Multiplexer benötigt für die Umwandlung der nahtlosen Verkettung von vier Multiplexeinheiten in eine virtuelle Verkettung von drei Multiplexeinheiten die Information, das und welche der vier Multiplexeinheiten entfallen soll. Eine Möglichkeit besteht darin, daß der IP-Router die Information bereitstellt. Dies kann entweder über einen dedizierten Steuerkanal im Kopfbereich der Multiplexeinheiten oder Transportmodule oder über ein übergeordnetes Netzwerkmanagementsystem erfolgen. Eine andere Möglichkeit besteht darin, daß in dem Multiplexer selbsttätig z.B. anhand des Füllmusters oder anhand fehlender IP-Header erkannt wird, daß eine der Multiplexeinheiten nicht mit IP-Paketen bepackt ist und diese freie Multiplexeinheit bei der Umwandlung dann weggelassen wird. Entweder kann die selbsttätige Erkennung durch Überwachen der Nutzlast in dem Multiplexer ausgeführt werden, oder auch dadurch daß unbenutzte Multiplexeinheiten von dem IP-Router im Kopfbereich markiert werden.

Bei Verwendung einer Variante des PPP-Protokolls (Point-to-Point Protocol, IETF) oder eine ähnlichen Variante, werden IP-Pakete in HDLC-Frames eingerahmt. Bytes zwischen den HDLC-Frames sind Füllmuster.

In Figur 3 ist nun gezeigt, daß nur zwei der vier Multiplexeinheiten zum Transport von IP-Paketen verwendet werden und daß der Multiplexer bei der Umwandlung zu virtueller Verkettung die zwei unbenutzten Multiplexeinheiten wegläßt und lediglich zwei der ursprünglich vier Multiplexeinheiten über das Nachrichtenübertragungsnetz SDH überträgt. Diese Verkettung wird dann als VC-4-2v bezeichnet. Ähnlich kann die nahtlose Verkettung auch durch weglassen dreier leerer Multiplexeinheiten in eine einzige Multiplexeinheit überführt werden.

Die Erfindung ist nicht beschränkt auf eine Verkettung virtueller Container vom Typ VC-4. Ebenso können beispielsweise Container vom Typ VC-12 mit einer Nutzlast von 2 Mbit verwendet werden. Möglich ist auch der Einsatz in SONET-Systemen mit Containern vom Typ VC-3 oder VC-11 (VT-1,5). Ebenso sind größere Verkettungen von beispielsweise 8, 16 oder 64 Containern möglich.

Die Umwandlung in eine kleiner Anzahl von virtuell verketteten Multiplexeinheiten kann auch vordefiniert sein, so daß z.B. zu bestimmten Zeiten die volle Bandbreite aller Multiplexeinheiten zur Verfügung steht, zu anderen Zeiten jedoch nur eine reduzierte Kapazität. Beispielsweise kann von 8:00 bis 10:00 und von 16:00 bis 18:00 Uhr eine Verkettung von drei VC-4 gewählt werden, in Hauptzeiten von 10:00-16:00 Uhr eine virtuelle Verkettung von allen vier VC-4 und in Nebenzeiten von 18:00 bis 8:00 Uhr von nur ein oder zwei VC-4. So kann die tatsächlich übertragene Nutzlast an die statistische Ausnutzung des Datennetzes angepaßt werden. Alternativ kann auch eine dynamische Anpassung nach einem ermittelten Verkehrsaufkommen etwa alle 10 min. erfolgen. Wird eine Voreinstellung verwendet, so entfällt die Übermittlung der Information, welche Multiplexeinheiten aktuell für Datenpakete genutzt werden vom IP-Router an den Multiplexer.

Auf diese Weise ergibt sich ein erheblicher Vorteil für den Betreiber des Datennetzes, da er Gebühren nur für die tatsächlich übertragenen Multiplexeinheiten an den Betreiber des synchronen Nachrichtenübertragungsnetzes, das er als Backbone nutzt, entrichten muß.

Ein weiterer bevorzugter Einsatz des erfindungsgemäßen Verfahrens ist zur Übertragung von Datenpaketen, die nach dem Protokoll für asynchronen Transportmodus (ATM) strukturiert sind. Als Peripheriegerät dient in diesem Fall ein ATM-Switch, der die aus ATM-Zellen bestehende Nutzlast in nahtlos verkettete Multiplexeinheiten verpackt und an den Multiplexer des synchronen Nachrichtennetzes überträgt.

Ein weiterer bevorzugter Einsatz des erfindungsgemäßen Verfahrens ist zur Übertragung von Datenpaketen, die nach dem Protokoll für Ethernet strukturiert sind. Die Ethernet-Frames sind in HDLC-Frames eingerahmt und werden transparent in verketteten SDH-Containern transportiert. Zwischen den HDLC-Frames kann ein Füllmuster eingefügt werden, das bei der erfindungsgemäßen Kompression entfernt wird, um so die Anzahl der verketteten Container zu reduzieren.

Bislang wurde nur eine Übertragungsrichtung berücksichtigt. Bei bidirektionalen Verbindungen ergibt sich jedoch ein weiterer vorteilhafter Einsatzbereich. Bei klassischen Gesprächsverbindungen war stets in beiden Richtungen (,upstream' und ,downstream') die gleiche Übertragungsrate erforderlich. Dies ändert sich jedoch bei Datenübertragung. So wird erwartet, daß in zukünftigen Datennetzen der Verkehr stark asymmetrisch ausfällt wie z.B. bei ADSL (Asymmetrical Digital Subscriber Line). Die erfindungsgemäße Kompression kann daher vorteilhaft in nur einer Übertragungsrichtung eingesetzt werden, während in der anderen Übertragungsrichtung die volle Kapazität aller verketteten Multiplexeinheiten zur Verfügung steht. Hierbei ist die erfindungsgemäße Kompression von besonderem Vorteil, da in der Regel die physikalischen Schnittstellen der Peripheriegeräte die gleiche Bandbreite in beide Richtungen anbieten. Somit kann die Übertragungskapazität auch bei solchen symmetrischen Schnittstellen an ein asymmetrisches Verkehrsaufkommen angepaßt werden.

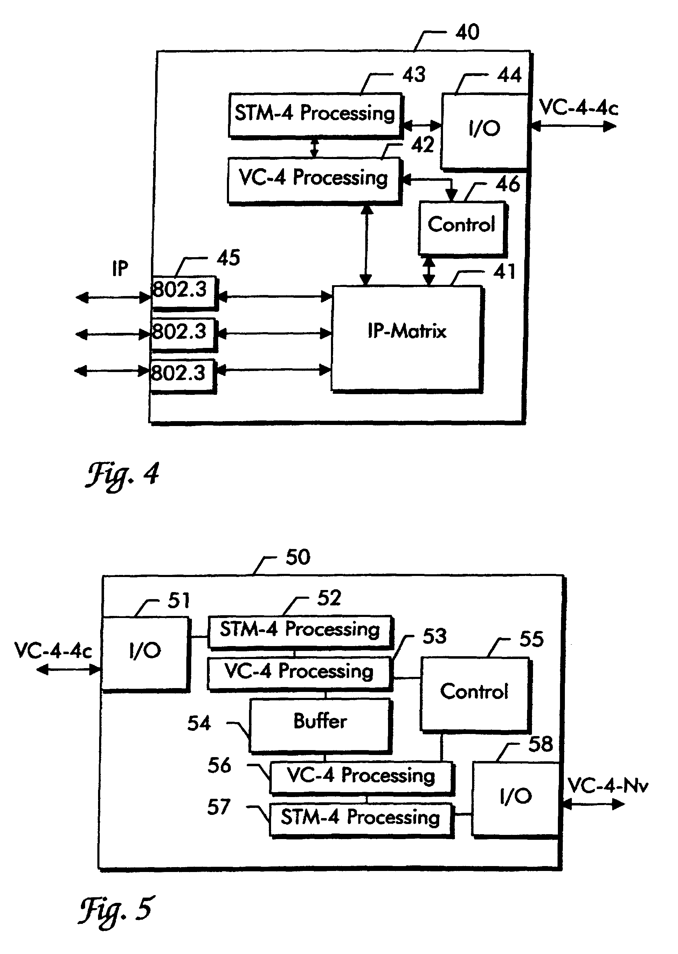

Der IP-Router 40 des Ausführungsbeispieles ist in Figur 4 in einem Blockdiagramm schematisch gezeigt. Er weist mehrere LAN-Schnittstellen 45 (LAN: local area network), die entsprechend dem Standard für Ethernet IEEE 802.3 nach einem asynchronen Übertragungsverfahren mit Kollisionserkennung arbeiten. An jeder der LAN-Schnittstellen ist ein lokales Datennetz angeschlossen und der IP-Router 40 empfängt jeweils Datenpakete IP, die nach dem Internetprotokoll strukturiert sind. Die Datenpakete werden von den LAN-Schnittstellen an eine IP-Matrix 41 geleitet. Diese entscheidet anhand der Zieladresse jedes Datenpaketes, wohin es gesendet werden soll. Datenpakete, die für ein anderes an den IP-Router angeschlossenes Datennetz bestimmt sind, werden an der entsprechenden LAN-Schnittstelle gesendet. Die übrigen Datenpakete, d.h. die Datenpakete, die nicht für eines der an den LAN-Schnittstellen angeschlossenen lokalen Datennetze bestimmt sind, werden von der IP-Matrix 41 zu einer Verarbeitungseinheit 42 geschaltet. Dort werden vier Multiplexeinheiten vom Typ VC-4 gebildet und mit den Datenpaketen bepackt. Die bepackten Multiplexeinheiten werden an eine Verarbeitungseinheit 43 für Transportmodule vom Typ STM-4 weitergeleitet, wo durch nahtloses Verketten und byteweises Verschachteln der vier Multiplexeinheiten ein rahmenstrukturiertes Multiplexsignal vom Type STM-4, VC-4-4c gebildet wird, das dann an der Schnittstelle I/O 44 als synchrones Nachrichtensignal gesendet wird. In der STM-4-Verarbeitungseinheit wird auch ein Zeiger bestimmt und in den Kopfbereich der Transportmodule geschrieben, der auf den Beginn der ersten Multiplexeinheit zeigt. Bei der Schnittstelle I/O 44 handelt es sich um eine optische Schnittstelle.

Der IP-Router 40 weist weiterhin eine Steuerungseinrichtung 46 auf, die mit der IP-Matrix 41 und der Verarbeitungseinheit 42 für Multiplexeinheiten VC-4 verbunden ist. In der IP-Matrix 41 wird ein aktuelles Verkehrsaufkommen bestimmt und an die Steuerungseinrichtung 46 geleitet. Diese entscheidet daraufhin in regelmäßigen Abständen entsprechend dem Verkehrsaufkommen oder wahlweise auch nach einem vorgegebenen Zeitplan, wieviele der vier Multiplexeinheiten mit Datenpaketen bepackt werden sollen und teilt dies der VC-4-Verarbeitungseinrichtung 42 mit. Dementsprechend werden in der Verarbeitungseinrichtung 42 nur die ausgewählten Multiplexeinheiten bepackt, die übrigen werden mit einem Füllmuster aufgefüllt. In der Verarbeitungseinheit 42 werden die nicht bepackten Multiplexeinheiten im Kopfbereich markiert. Hierfür kann eines der für proprietäre Zwecke reservierten Overhead-Bytes verwendet werden.

Der IP-Router kann auch so konfiguriert sein, daß stets nur zwei oder drei der vier nahtlos verketteten Multiplexeinheiten mit Nutzdaten gefüllt werden. In diesem Fall ist eine Steuerungseinrichtung 46 nicht notwendig. Die Verarbeitungseinheit 42 ist dann so eingestellt, daß nur die vorbestimmten Multiplexeinheiten mit IP-Paketen bepackt werden und die übrigen stets frei bleiben.

Aus dem Beispiel wird deutlich, daß die IP-Matrix 41 eine Filterfunktion ausführt, da nur solche IP-Pakete von der Matrix zu der VC-4-Verarbeitungseinheit geleitet werden, die über das synchrone digitale Nachrichtenübertragungsnetz zu anderen lokolen Datennetzen transportiert werden sollen, die nicht direkt an einer LAN-Schnittstelle des IP-Routers angeschlossen sind. Die IP-Matrix 41 kann auch eine weitere Filterfunktion ausführen, indem sie Datenpakete, deren Zustellung über das synchrone digitale Nachrichtenübertragungsnetz nicht möglich ist, verwirft oder mit einer entsprechenden Fehlermeldung an den Absender zurückschickt. Eine solche Filterfunktion kann durch entsprechende Einträge in der Routing-Tabelle der IP-Matrix ausgeführt werden. So können nicht existierende oder aufgrund eines Konfigurationsfehlers fehlerhafte IP-Adressen herausgefiltert werden. Zudem kann auf diese Weise eine Schutzfunktion in der Art eines Firewalls realisiert werden.

Der Multiplexer 50, der das synchrone Nachrichtensignal empfängt, die nahtlose Verkettung in virtuelle Verkettung umwandelt und die Multiplexeinheiten über das synchrone Nachrichtenübertragungssystem überträgt ist, in Figur 5 schematisch dargestellt. Er empfängt an einer ersten Schnittstelle I/O 51 das synchrone Nachrichtensignal von dem Peripheriegerät. In einer ersten Verarbeitungseinheit 52 für Transportmodule vom Typ STM-4 wird die byteweise Verschachtelung aufgelöst und der Zeiger auf die erste Multiplexeinheit ausgewertet. Entsprechend dem Zeigerwert werden die vier verketteten Multiplexeinheiten ausgelesen und an eine erste Verarbeitungseinheit 53 für Multiplexeinheiten vom Typ VC-4 geleitet. Dort wird der Kopfbereich der einzelnen Multiplexeinheiten ausgewertet. Eine Markierung, die daraufhinweist, daß die entsprechende Multiplexeinheit nicht mit Nutzdaten gefüllt ist, wird erkannt und die entsprechende Multiplexeinheit daraufhin ausgesondert. Die Information darüber wird auch an eine Steuerungseinrichtung 55 weitergeleitet. Die übrigen Multiplexeinheiten werden in einem Pufferspeicher 54 zwischengespeichert. Von dort aus werden sie von einer zweiten Verarbeitungseinheit 56 für Multiplexeinheiten vom Typ VC-4 wieder ausgelesen. Von der Steuerungseinheit erhält die zweite VC-4-Verarbeitungseinheit 56 die Information, welche und wieviele Multiplexeinheiten zu einer virtuellen Verkettung zusammengefügt werden sollen. Die virtuelle Verkettung erfolgt durch eine entsprechende Kennzeichnung im Kopfbereich der Multiplexeinheiten. Dazu wird derzeit das H4-Byte verwendet.

Die verketteten Multiplexeinheiten werden dann einer zweiten Verarbeitungseinheit 57 für Transportmodule vom Typ STM-4 zugeleitet, wo sie in jeweils einen eigenen STM-1-Rahmen verpackt werden. Die STM-1-Rahmen werden byteweise verschachtelt, um ein aus Transportmodulen vom Type STM-4 bestehendes synchrones Nachrichtensignal zu bilden, das dann an einer zweiten Schnittstelle I/O 58 in dos synchrone digitale Nachrichtenübertragungsnetz gesendet wird. Die zweite STM-4-Verarbeitungseinheit 56 bestimmt auch einen Zeiger für jede der Multiplexeinheiten, der auf den Beginn der jeweiligen Multiplexeinheit zeigt und in den Kopfbereich der jeweiligen STM-1-Transportmodule geschrieben wird.

Im Ausführungsbeispiel enthält das Eingangssignal des Multiplexers eine nahtlose Verkettung VC-4-4c aus vier Multiplexeinheiten vom Type VC-4. Eine der vier Multiplexeinheiten ist jedoch beispielsweise nicht für den Transport von Nutzdaten genutzt und als solche im Kopfbereich gekennzeichnet. In der ersten VC-4-Verarbeitungseinheit wird diese Multiplexeinheit ausgesondert. Über die Steuerungseinrichtung wird die Information, daß die übrigen drei Multiplexeinheiten virtuell verkettet werden sollen an die zweite VC-4-Verarbeitungseinheit weitergeleitet. Diese führt die entsprechende Verkettung durch. So wird ein Ausgangssignal gebildet, daß eine virtuelle Verkettung VC-4-3v aus drei Multiplexeinheiten VC-4 enthält. Die übrige Übertragungskapazität kann für zusätzlichen Verkehr, beispielsweise für ein Bündel von Telefonverbindungen genutzt werden. Vorteilhafterweise teilt der Multiplexer dem Netzwerkmanagementsystem mit, wieviele Multiplexeinheiten die virtuelle Verkettung umfaßt, damit über das Netzwerkmanagementsystem die freie Übertragungskapazität für andere Zwecke vergeben werden kann.

Anstelle ungenutzte Multiplexeinheiten der nahtlosen Verkettung im Kopfbereich zu markieren, kann die Information, welche der verketteten Multiplexeinheiten für den Transport von Nutzdaten verwendet werden, auch über das Netzwerkmanagementsystem von dem Peripheriegerät zu dem Multiplexer weitergeleitet werden. Alternativ findet in dem Multiplexer eine Auswertung der in jeder Multiplexeinheit enthaltenen Nutzlast statt, um zu ermitteln, welche der Multiplexeinheiten mit Nutzdaten bepackt sind und welche ungenutzt sind.

Bei dem Multiplexer kann es sich um einen Terminalmultiplexer, einen Add/Drop-Multiplexer oder auch um einen digitalen Crossconnect handeln. Er kann auch weiter Baugruppen wie eine Zeit- und Raumschaltmatrix für Multiplexeinheiten und weitere Schnittstellen zum Nachrichtenübertragungsnetz aufweisen. Die einzelnen Multiplexeinheiten der virtuellen Verkettung können in diesem Fall über verschiedene Schnittstellen und verschiedene Pfade zum Zielnetzelement übertragen werden. Anstelle von Multiplexeinheiten vom Type VC-4 können auch andere, kleinere Untereinheiten aus der Multiplexhierarchie des Übertragungssystems eingesetzt werden, wie beispielsweise VC-12 oder VC-3.

Eine alternative Ausführungsform des Peripheriegerätes ist ein ATM-Switch. Dieser ist ähnlich aufgebaut wie der IP-Router in Figur 4, besitzt jedoch anstelle der LAN-Schnittstellen entsprechende ATM-Schnittstellen und anstelle der IP-Matrix eine Schaltmatrix für ATM-Zellen.

## Patentansprüche

1. Verfahren zur Übertragung von Nutzdaten über ein synchrones digitales Nachrichtenübertragungsnetz (SDH), bei dem die Nutzdaten in Multiplexeinheiten verpackt werden, bei dem mehrere Multiplexeinheiten (VC-4-4c) nahtlos verkettet werden, bei dem die nahtlos verketteten Multiplexeinheiten (VC-4-4c) in einem gemeinsamen Transportmodul (STM-4) übertragen werden und bei dem die nahtlose Verkettung der Multiplexeinheiten (VC-4-4c) in eine virtuelle Verkettung von Multiplexeinheiten (VC-4-4v, VC-4-3v, VC-4-2v, VC-4-Nv) umgewandelt wird,
**dadurch gekennzeichnet, dass**
mindestens eine der Multiplexeinheiten nicht mit Nutzdaten gefüllt wird und bei der Umwandlung solche Multiplexeinheiten weggelassen werden, die nicht mit Nutzdaten gefüllt sind.

2. Verfahren nach Anspruch 1, bei dem die Nutzdaten Datenpakete sind, die nach dem Internetprotokoll strukturiert sind, bei dem das Verpacken der Datenpakete in die Multiplexeinheiten in einem IP-Router (10; 40) durchgeführt wird, bei dem das Umwandeln der nahtlosen Verkettung (VC-4-4c) in die virtuelle Verkettung (VC-4-Nv) in einem Multiplexer (12; 50) des synchronen digitalen Nachrichtenübertragungsnetzes (SDH) durchgeführt wird und bei dem der IP-Router (10; 40) dem Multiplexer (12; 50) mitteilt, welche der verketteten Multiplexeinheiten mit Datenpaketen gefüllt sind.

3. Verfahren nach Anspruch 1, bei dem die Nutzdaten Datenpakete sind, die nach dem Protokoll für asynchronen Transport Modus strukturiert sind, bei dem das Verpacken der Datenpakete in die Multiplexeinheiten in einem ATM-Switch durchgeführt wird, bei dem das Umwandeln der nahtlosen Verkettung in die virtuelle Verkettung in einem Multiplexer (12; 50) des synchronen digitalen Nachrichtenübertragungsnetzes (SDH) durchgeführt wird und bei dem der ATM-Switch dem Multiplexer (12; 50) mitteilt, welche der verketteten Multiplexeinheiten mit Datenpaketen gefüllt sind.

4. Verfahren nach Anspruch 1, bei dem die virtuelle Verkettung anschließend wieder in eine nahtlose Verkettung umgewandelt wird und dabei die weggelassenen Multiplexeinheiten durch leere Multiplexeinheiten ergänzt werden.

5. Multiplexer (12; 50) für ein synchrones digitales Nachrichtenübertragungsnetz (SDH),
- mit einer ersten Schnittstelle (51) zum Empfangen eines ersten zu Transportmodulen (STM-4) strukturierten Nachrichtensignals, in dem mehrere nahtlos verkettete Multiplexeinheiten (VC-4-4c) enthalten sind, die zu übertragende Nutzdaten enthalten,
- mit einer Umwandlungseinheit (53, 54, 55, 56) zum Umwandeln der nahtlosen Verkettung (VC-4-4c) in eine virtuelle Verkettung der Multiplexeinheiten (VC-4-4v, VC-4-3v, VC-4-2v, VC-4-Nv) und
- mit mindestens einer zweiten Schnittstelle (58) zum Senden mindestens eines zweiten zu Transportmodulen strukturierten Nachrichtensignals, in dem die virtuell verketteten Multiplexeinheiten (VC-4-4v, VC-4-3v, VC-4-2v, VC-4-Nv) enthalten sind,
**dadurch gekennzeichnet, dass**
die Umwandlungseinheit (53, 54, 55, 56) angepasst ist, für den Fall, dass mindestens eine der nahtlos verketteten Multiplexeinheiten nicht mit Nutzdaten gefüllt ist, bei der Umwandlung der nahtlosen Verkettung (VC-4-4c) in die virtuelle Verkettung (VC-4-4v, VC-4-3v, VC-4-2v, VC-4-Nv) solche Multiplexeinheiten wegzulassen, die nicht mit Nutzdaten gefüllt sind.

6. Peripheriegerät (10, 40) zum Übertragen von Nutzdaten über ein synchrones digitales Nachrichtenübertragungsnetz, wobei das Peripheriegerät (10; 40) eine Signalerzeugungseinrichtung (43) zum Erzeugen eines zu Transportmodulen strukturierten Nachrichtensignals aufweist, in dem mehrere nahtlos verkettete Multiplexeinheiten (VC-4-4c) enthalten sind, die zu übertragende Nutzdaten enthalten sowie eine Multiplexeinrichtung (42) zum Packen der Nutzdaten in die Multiplexeinheiten,
**dadurch gekennzeichnet, dass**
die Multiplexeinrichtung (42) dazu geeignet ist, stets nur ausgewählte Multiplexeinheiten der nahtlosen Verkettung (VC-4-4c) mit Nutzdaten zu füllen und mindestens eine nicht ausgewählte Multiplexeinheit stets nicht mit Nutzdaten zu füllen.

7. Peripheriegerät (10, 40) nach Anspruch 6 mit einer Steuerungseinrichtung (46), die ausgebildet ist zu entscheiden, wie viele der Multiplexeinheiten mit Datenpaketen gefüllt werden sollen und die Multiplexeinrichtung (42) so zu steuern, dass diese nur die so ausgewählten Multiplexeinheiten mit Nutzdaten füllt, während die übrigen nicht mit Nutzdaten gefüllt werden.

8. Peripheriegerät (10, 40) nach Anspruch 6, bei dem die Multiplexeinrichtung (42) derart konfigurierbar ist, dass voreingestellt werden kann, welche Multiplexeinheiten ausgewählt sind um mit Nutzdaten gefüllt zu werden und welche stets nicht mit Nutzdaten gefüllt werden.

## Claims

1. Method of transmitting payload data via a synchronous digital message transmission network (SDH), the payload data being packed into multiplex units, multiple multiplex units (VC-4-4c) being contiguously concatenated, the contiguously concatenated multiplex units (VC-4-4c) being transmitted in a common transport module (STM-4), and the contiguous concatenation of multiplex units (VC-4-4c) being converted into a virtual concatenation of multiplex units (VC-4-4v, VC-4-3v, VC-4-2v, VC-4-Nv),
**characterized in that**
at least one of the multiplex units is not filled with payload data, and in the conversion those multiplex units which are not filled with payload data are omitted.

2. Method according to Claim 1, in which the payload data are data packets which are structured according to the Internet protocol, the data packets being packed into the multiplex units in an IP router (10; 40), the contiguous concatenation (VC-4-4c) being converted into the virtual concatenation (VC-4-Nv) in a multiplexer (12; 50) of the synchronous digital message transmission network (SDH), and the IP router (10; 40) informing the multiplexer (12; 50) about which of the concatenated multiplex units are filled with data packets.

3. Method according to Claim 1, the payload data being data packets which are structured according to the protocol for Asynchronous Transport Mode, the data packets being packed into the multiplex units in an ATM switch, the contiguous concatenation being converted into the virtual concatenation in a multiplexer (12; 50) of the synchronous digital message transmission network (SDH), and the ATM switch informing the multiplexer (12; 50) about which of the concatenated multiplex units are filled with data packets.

4. Method according to Claim 1, the virtual concatenation then being converted back into a contiguous concatenation, and the omitted multiplex units being replenished by empty multiplex units.

5. Multiplexer (12; 50) for a synchronous digital message transmission network (SDH),
- with a first interface (51) to receive a first message signal which is structured into transport modules (STM-4), containing multiple contiguously concatenated multiplex units (VC-4-4c) containing payload data to be transmitted,
- with a conversion unit (53, 54, 55, 56) to convert the contiguous concatenation (VC-4-4c) into a virtual concatenation of the multiplex units (VC-4-4v, VC-4-3v, VC-4-2v, VC-4-Nv), and
- with at least one second interface (58) to send at least one second message signal which is structured into transport modules, and in which the virtually concatenated multiplex units (VC-4-4v, VC-4-3v, VC-4-2v, VC-4-Nv) are contained,
**characterized in that**
the conversion unit (53, 54, 55, 56) is adapted, for the case that at least one of the contiguously concatenated multiplex units is not filled with payload data, to omit those multiplex units which are not filled with payload data in the conversion of the contiguous concatenation (VC-4-4c) into the virtual concatenation (VC-4-4v, VC-4-3v, VC-4-2v, VC-4-Nv).

6. Peripheral device (10,40) to transmit payload data via a synchronous digital message transmission network, the peripheral device (10; 40) having a signal generation device (43) to generate a message signal which is structured into transport modules, containing multiple contiguously concatenated multiplex units (VC-4-4c) containing payload data to be transmitted, and a multiplexing device (42) to pack the payload data into the multiplex units,
**characterized in that**
the multiplexing device (42) is suitable for always filling only selected multiplex units of the contiguous concatenation (VC-4-4c) with payload data, and always not filling at least one multiplex unit which has not been selected with payload data.

7. Peripheral device (10, 40) according to Claim 6, with a control device (46), which is in a form to decide how many of the multiplex units are to be filled with data packets, and to control the multiplexing device (42) in such a way that it fills only the thus selected multiplex units with payload data, whereas the others are not filled with payload data.

8. Peripheral device (10, 40) according to Claim 6, the multiplexing device (42) being configurable in such a way that it is possible to predefine which multiplex units are selected to be filled with payload data, and which are always not filled with payload data.

## Revendications

1. Procédé de transmission de données utiles par l'intermédiaire d'un réseau de télécommunications synchrone digital (SDH) dans lequel les données utiles sont comprimées dans des unités de multiplexage, dans lequel plusieurs unités de multiplexage (VC-4-4c) sont concaténées en continu, dans lequel plusieurs unités de multiplexage concaténées en continu (VC-4-4v, VC-4-3v, VC-4-2v, VC-4-1v) sont transmises dans un module de transport commun (STM-4) et dans lequel la concaténation continue des unités de multiplexage (VC-4-4c) est convertie en une concaténation virtuelle d'unités de multiplexage (VC-4-4v, VC-4-3v, VC-4-2v, VC-4-1v), **caractérisé en ce qu'**au moins une des unités de multiplexage n'est pas remplie avec des données utiles et les unités de multiplexage non remplies de données utiles sont ignorées lors de la conversion.

2. Procédé selon la revendication 1, dans lequel les données utiles sont des paquets de données structurées selon le protocole Internet dans lequel la compression des paquets de données dans les unités de multiplexage est effectuée dans un routeur IP (10;40), dans lequel la conversion de la concaténation continue (VC-4-4c) en une concaténation virtuelle (VC-4-Nv) est effectuée dans un multiplexeur (12;50) du réseau de télécommunications synchrone digital (SDH) et dans lequel le routeur IP (10;40) indique au multiplexeur (12;50) laquelle des unités de multiplexage concaténées est remplie de paquets de données.

3. Procédé selon la revendication 1, dans lequel les données utiles sont des paquets de données structurés selon le protocole de mode de transport asynchrone, dans lequel la compression des paquets de données est effectuée dans un commutateur ATM, dans lequel la conversion de la concaténation continue en une concaténation virtuelle est effectuée dans un multiplexeur (12;50) du réseau de télécommunications synchrone digital (SDH) et dans lequel le commutateur ATM indique au multiplexeur (12;50) quelles unités de multiplexage concaténées sont remplies de paquets de données.

4. Procédé selon la revendication 1, dans lequel la concaténation virtuelle est ensuite convertie à nouveau en une concaténation continue et les unités de multiplexage ignorées sont complétées par des unités de multiplexage vides.

5. Multiplexeur (12;50) pour un réseau de télécommunications synchrone digital (SDH)
- avec une première interface (51) pour la réception d'un premier signal structuré en modules de transport (STM-4) dans lequel sont contenues plusieurs unités de multiplexage concaténées en continu (VC-4-4c), qui contiennent les données utiles à transmettre,
- avec une unité de conversion (53, 54, 55, 56) pour convertir la concaténation continue (VC-4-4c) en une concaténation virtuelle des unités de multiplexage (VC-4-4v, VC-4-3v, VC-4-2v, VC-4-1v) et
- avec au moins une deuxième interface (58) pour l'émission d'au moins un deuxième signal structuré en modules de transport, dans lequel les unités de multiplexage concaténées virtuellement (VC-4-4v, VC-4-3v, VC-4-2v, VC-4-1v) sont contenues,
**caractérisé en ce que** l'unité de conversion (53, 54, 55, 56) peut, au cas où au moins une des unités de multiplexage concaténées en continu n'est pas remplie avec des données utiles, ignorer, lors de la conversion de la concaténation continue (VC-4-4c) en une concaténation virtuelle (VC-4-4v, VC-4-3v, VC-4-2v, VC-4-1v), celles qui ne sont pas remplies de données utiles.

6. Périphérique (10,40) pour la transmission de données utiles par l'intermédiaire d'un réseau de télécommunications synchrone digital, moyennant quoi le périphérique (10;40) comporte un dispositif de production de signaux (43) pour la production d'un signal structuré en modules de transport, dans lequel plusieurs unités de multiplexage concaténées en continu (VC-4-4c) sont contenues, qui contiennent les données utiles à transmettre ainsi qu'un dispositif de multiplexage (42) pour la compression des données utiles dans les unités de multiplexage, **caractérisé en ce que** le dispositif de multiplexage (42) est adapté à remplir toujours seulement les unités de multiplexage sélectionnées de la concaténation continue (VC-4-4c) et à ne pas remplir de données utiles au moins une unité de multiplexage.

7. Périphérique (10,40) selon la revendication 6 avec un dispositif de commande (46) conçu pour décider combien d'unités de multiplexage doivent être remplies de paquets de données et de commander le dispositif de multiplexage (42) de façon à ce qu'il remplisse les unités de multiplexage ainsi sélectionnées avec des données utiles, tandis que les autres ne sont pas remplies de données utiles.

8. Périphérique (10,40) selon la revendication 6, dans lequel le dispositif de multiplexage (42) peut être configuré de façon à pouvoir prédéterminer quelles unités de multiplexage sont sélectionnées et remplies de données utiles et lesquelles ne sont jamais remplies de données utiles.
